# FASCICULE DE BREVET EUROPEEN

(11) **EP 3 329 177 B1**
(45) Date de publication et mention de la délivrance du brevet: **04.11.2020**
(21) Numéro de dépôt: 16757285.8
(22) Date de dépôt: 20.07.2016
(51) Int. Cl.: F17C 13/08

(54) **INSTALLATION DE DISTRIBUTION DE GAZ DE TRAVAIL**
ANLAGE ZUR VERTEILUNG VON ARBEITSGAS
FACILITY FOR DISTRIBUTING WORKING GAS

(30) Priorité: 31.07.2015 FR 1557392
(43) Date de publication de la demande: 06.06.2018
(73) Titulaire: L'Air Liquide Société Anonyme pour l'Etude et l'Exploitation des Procédés Georges Claude, 75007 Paris (FR); Air Liquide Electronics Systems, 75007 Paris (FR)
(72) Inventeur: OUERD, Aziz, 38100 Grenoble (FR); DULPHY, Hervé, 38560 Jarrie (FR); LAURENT, Valère, 38130 Échirolles (FR); SIAUVE, Stéphane, 38130 Échirolles (FR)
(74) Mandataire: Debecker, Isabelle Virginie
(86) Numéro de dépôt international: PCT/FR2016/051876
(87) Numéro de publication internationale: WO 2017/021615

(56) Documents cités:
- EP-A1- 1 229 990
- EP-A2- 0 916 891
- EP-A2- 2 428 286
- FR-A1- 2 772 881
- FR-A1- 2 924 198
- US-A- 5 240 024
- US-A- 5 440 477

## Description

L'invention est relative à un dispositif de distribution d'un gaz de travail et à une installation de fourniture de tels gaz, utilisés pour amener les gaz mis en œuvre dans les procédés de différentes industries telles que les industries du semi-conducteur, du photovoltaïque, des LED, des écrans plats ou toute autre industrie comme les industries minières ou pharmaceutiques, de la bouteille à l'équipement ou réacteur utilisé pour ces procédés.

La mise en œuvre de ces procédés nécessite souvent l'utilisation de gaz dangereux de haute qualité réclamant par exemple des purges automatiques et une distribution continue. Par exemple, la fabrication de circuits électroniques nécessite l'utilisation de divers gaz dits "de travail" comme par exemple Cl₂, NH₃, HCl, HBr, NF₃ ou WF₆ etc. qui sont considérés pour la plupart comme dangereux pour l'homme du fait de leur toxicité et/ou de leur inflammabilité.

Beaucoup d'installations industrielles exigent un équipement capable de commander automatiquement l'approvisionnement en gaz et fluides de certains équipements. En particulier, la fabrication des circuits intégrés inclut généralement plusieurs procédés tels que, par exemple, la déposition en phase vapeur dans laquelle une variété de gaz est amenée dans une chambre de réaction dans laquelle est confiné un substrat de semi-conducteur. La température et la pression de dépôt des diverses couches de matériaux développés pour créer les modèles tridimensionnels de circuits intégrés sont soigneusement contrôlées dans cette enceinte.

Toutes les substances transportées dans et hors de la chambre de réaction doivent être constamment surveillées, puisque les proportions des différents réactifs qui constituent l'atmosphère de vapeur déterminent finalement les dimensions physiques des éléments qui composeront collectivement un circuit électrique simple et vaste sur un morceau minuscule de silicium, notamment des transistors, des condensateurs, et des résistances.

Une des plus grandes causes de mauvais fonctionnement des circuits intégrés est attribuable aux particules de poussière microscopiques qui contaminent la zone de travail où le circuit est fabriqué. Un corps étranger minuscule peut endommager un circuit très cher et le rendre inutilisable. Afin de se protéger d'une telle contamination particulaire, les fabricants de semi-conducteurs fabriquent leurs produits dans un environnement de "salle blanche" protégée.

L'air admis dans une salle blanche est d'abord filtré, éliminant ainsi presque entièrement les particules de poussière non désirées. Les techniciens qui travaillent dans ces environnements, portent une tenue et des masques spéciaux qui empêchent l'introduction de substances qui endommageraient leur travail méticuleux. Les coûts liés à la maintenance et au bon fonctionnement de cet environnement fortement spécialisé sont considérables. En conséquence, tout l'espace d'une salle blanche doit être utilisé le plus efficacement possible.

Outre ce besoin critique, les produits chimiques utilisés doivent être distribués avec grand soin. Les produits chimiques liquides ainsi que les gaz spéciaux utilisés dans l'industrie des semi-conducteurs sont souvent toxiques. Les dispositifs choisis pour distribuer ces produits potentiellement dangereux, doivent assurer un usage fiable, protégé de la corrosion ou de la fuite.

Des « gas cabinets » standards sont surtout utilisables de manière courante et fiable pour des applications de production et de distribution à longue durée. Ces systèmes sont installés intégralement dans des grandes armoires dans des pièces dédiées pouvant se trouver à plusieurs dizaines de mètres de l'équipement auquel ils sont raccordés. De tels systèmes sont connus de US-A-5440477 et FR-A-2924198.

Le développement d'une installation de distribution de gaz ayant son agencement optimisé, utilisable avec n'importe quelle bouteille de gaz, sûre, à commande automatisée intelligente, utilisable dans des procédés de différentes industries telles que les industries du semi-conducteur, du photovoltaïque, des LED, des écrans plats ou toute autre industrie comme les industries minières ou pharmaceutiques, de la bouteille à l'équipement ou réacteur utilisé pour ces procédés, constituerait un progrès technologique important. La mise en œuvre d'un dispositif si innovateur satisferait à un long besoin dans de telles industries.

Un but de la présente invention est de pallier tout ou partie des inconvénients de l'art antérieur relevés ci-dessus.

A cette fin, la présente invention a pour objet une installation de fourniture de gaz munie d'une enceinte d'isolation comprenant une paroi arrière et deux parois latérales ainsi que d'une porte pivotant autour d'un axe vertical pour permettre l'ouverture et la fermeture de l'enceinte, ladite installation comprenant deux blocs multifonctions, abritant chacun un circuit de fluide, fixés sur ladite paroi arrière à l'intérieure de ladite enceinte et comprenant chacun:
- un unique détendeur,
- un système de purge constitué de trois vannes,
- un moyen de connexion fluidique vers le contenu d'une bouteille,
- une sortie permettant l'alimentation en gaz d'un équipement,
caractérisée en ce que le détendeur est situé en amont du système de purge et en ce que la surface de l'empreinte murale de chaque bloc multifonctions sur ladite paroi arrière est inférieure à 270 cm², de préférence inférieure à 220 cm², et caractérisée en ce que les deux blocs (3) fixés chacun à une bouteille (B et B') sont agencés de manière à permettre un basculement automatique d'une bouteille à l'autre afin de permettre une distribution ininterrompue de gaz.

Par gaz spéciaux on entend tous les gaz généralement utilisés dans l'industrie des semi-conducteurs. Il peut s'agir de gaz inertes, toxiques, corrosifs, ou pyrophoriques. Ces gaz spéciaux peuvent être choisis parmi : HF, WF6, BCl3, ClF3, DCS, 3MS, C4F6, C4F8O, C4F8, Butane, SO2, Cl2, C3F8, NH3, Propane, SF6, HBr, C2F6, CH3F, HCl, CHF3, N2O contenus dans une bouteille B sous forme liquéfiée, ou encore parmi F2, PH3, B2H6, NO, NF3, SiH4, CF4, CH4, CO contenus dans la bouteille B sous forme comprimée. Ainsi selon la nature du gaz à distribuer et son état, liquéfié ou comprimé, la pression à l'intérieur des bouteilles B et B' est comprise entre 0 bar et 200 bars.

Par ailleurs, des modes de réalisation de l'invention peuvent comporter l'une ou plusieurs des caractéristiques suivantes :
- Installation telle que définie ci-dessus caractérisée en ce que deux bouteilles de gaz sont contenues dans l'enceinte, chacune des deux bouteilles étant reliée à un des deux blocs multifonctions.
- Installation telle que définie ci-dessus comprenant en outre un générateur de vide.
- Installation telle que définie ci-dessus caractérisée en ce que le système de purge est un système dit de purge en croix comprenant un premier conduit dit de pressurisation, un deuxième conduit de sortie permettant de faire le vide et un troisième conduit d'extraction permettant d'acheminer le gaz à distribuer vers un équipement, les trois conduits étant reliés en un point A situé en aval du détendeur.
- Installation telle que définie ci-dessus caractérisée en ce que les blocs multifonctions comprennent en outre un capteur de pression en amont du détendeur.
- Installation telle que définie ci-dessus caractérisée en ce que les blocs multifonctions comprennent en outre un capteur de pression en aval du détendeur.
- Installation telle que définie ci-dessus caractérisée en ce que le capteur de pression est en amont du système de purge.
- Installation telle que définie ci-dessus caractérisée en ce qu'elle comprend un raccord situé sur une de ses parois extérieures pouvant être connecté à un système d'extraction.
- Installation telle que définie ci-dessus caractérisée en ce qu'elle comprenant un système de commande permettant l'actionnement des vannes pneumatiques, la gestion des capteurs de pression et des cycles de purge.
- Installation telle que définie ci-dessus, caractérisée en ce que le système de commande contient un port de communication choisi parmi un émetteur-récepteur sans fil, un port ethernet, un émetteur-récepteur radio cellulaire, un émetteur-récepteur WIFI et un émetteur-récepteur Bluetooth.

Selon un aspect particulier de l'invention, la pression en sortie du détendeur est inférieure à 10 bars.

Un filtre peut optionnellement être intégré en amont et/ou en aval du détendeur. Ceci permettant la protection du détendeur ainsi que l'assurance de la pureté du gaz distribué, le cas échéant. Ceci est un autre avantage par rapport à l'utilisation d'un « gas cabinet » standard.

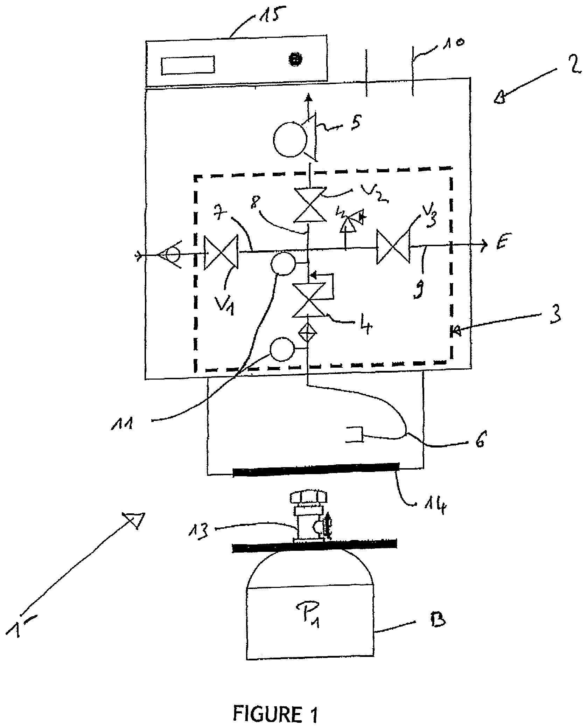

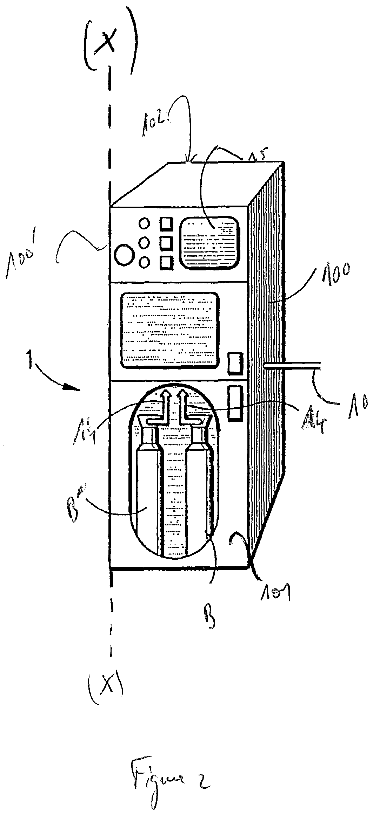

D'autres particularités et avantages apparaîtront à la lecture de la description ci-après, faite en référence aux figures 1 et 2.
La figure 1 représente un schéma simplifié d'un bloc multifonctions mis en œuvre dans l'installation selon l'invention.
La figure 2 est un schéma simplifié de l'installation selon l'invention ayant sa porte fermée.

Sur la figure 1 est représenté un ensemble 1' de distribution de gaz spéciaux constitué d'une bouteille B de gaz et d'un dispositif 2 de distribution de gaz spéciaux apte à être fixé sur la bouteille B.

Le dispositif 2 comporte un générateur de vide 5 et un bloc 3 multifonctions comprenant un unique détendeur 4, un système de purge comprenant trois vannes V1, V2 et V3, et un moyen de connexion 6 vers le contenu de la bouteille B.

Le détendeur 4 est situé en amont du système de purge, de sorte que le gaz provenant de la bouteille B à une pression P1, parvient au détendeur 4 à cette pression P1. En sortie du détendeur 4, le gaz circule à une pression de l'ordre de quelques bars, c'est-à-dire à basse pression.

En conséquence, les vannes V1, V2 et V3, ainsi que tous les autres composants susceptibles d'être compris dans le bloc multifonctions 3 subissent un gaz à basse pression. Ceci est un avantage considérable en termes de fiabilité, de sécurité et de durée de vie des composants. En outre cela diminue les risques de fuites.

D'autre part, cette caractéristique permet la miniaturisation de composants tels que les actionneurs des vannes à membrane, les conduits de gaz et les joints, par exemple, ainsi qu'une simplification de leur agencement.

Le système de purge comporte un premier conduit 7 sur lequel est située la vanne V1, destiné à recevoir un gaz de purge G pressurisant le circuit, lorsque la vanne V1 est ouverte. Ledit gaz de purge G peut être choisi parmi l'azote, l'argon, et l'hélium. De manière préférée, l'azote est utilisé pour la purge. Un deuxième conduit 8 comportant la vanne V2 est destiné à relier le premier conduit 7 au générateur de vide 5, qui peut être un venturi ou une mini pompe électrique. La connexion peut aussi être laissée libre pour permettre une connexion à un système externe de vide.

Ces deux premiers conduits 7 et 8 sont reliés en un point A situé en aval du détendeur 4, au conduit 9 contenant la vanne V3 destiné à alimenter l'équipement E lorsque la vanne V3 est ouverte.

Les systèmes de purges classiques comportent en général, en outre, une vanne dite d'isolation en amont du détendeur.

Cette vanne d'isolation est en principe nécessaire en cas de fuites ou d'alertes dues à un possible danger d'accident suite à un dysfonctionnement du système. En effet, cette vanne a pour fonction de fermer le système de distribution en pareille situation. Cela n'est pas nécessaire ici car le volume du bloc 3 est si faible que le risque de fuite entre la bouteille B et le détendeur 4 est considérablement réduit.

D'autre part, cette vanne devient inutile car les applications du système selon l'invention sont très ponctuelles, par ce qui implique la présence permanente d'un opérateur à côté du dispositif, capable de stopper lui même l'application en cas d'alerte. Dans le cas d'une bouteille comportant une vanne pneumatique, celle-ci peut également être contrôlée par le dispositif selon l'invention. Le dispositif selon l'invention ne contient donc aucun élément sensible en contact d'un gaz sous haute pression.

Le dispositif de distribution 2, objet de la présente invention peut également comporter un évent 10 permettant une extraction du gaz en cas de fuite. En effet, les gaz spéciaux utilisés dans l'industrie des semi-conducteurs sont dangereux. C'est pour cette raison que les dispositifs de distribution de gaz spéciaux standards sont enfermés dans une installation 1 en forme d'armoire (« gas cabinet » en anglais). Ici, la miniaturisation du dispositif permet d'enfermer les composants présents en nombre limité et disposés de manière simplifiée dans un bloc multifonctions 3 de volume réduit, assurant la protection nécessairement requise.

Le dispositif 2 de distribution peut également comporter dans son bloc multifonctions 3 des capteurs de pression 11 par exemple disposés en amont et/ou en aval du détendeur.

La commande du dispositif de distribution 2 est effectuée par l'intermédiaire d'un système 15 permettant la commande des vannes pneumatiques V1, V2 et V3 ainsi que l'automatisation de la séquence de purge.

Ce système 15 comporte par exemple une alimentation électrique, des électrovannes servant à actionner les vannes pneumatiques, un contrôleur logique, un bouton d'arrêt d'urgence, un écran, par exemple un écran LCD, pour visualiser l'état du système.

Le système de commande consiste par exemple en un contrôleur logique programmable.

Ce système de commande 15 contient par exemple un port de communication choisi parmi un émetteur-récepteur sans fil, un port ethernet, un émetteur-récepteur radio cellulaire, un émetteur-récepteur WIFI et un émetteur-récepteur Bluetooth.

Sur la figure 2, une installation 1 selon l'invention est représentée. L'installation 1 a une enceinte munie de deux parois latérales 100', d'une porte 101 pouvant pivoter autour d'un axe (X) afin d'assurer l'ouverture et la fermeture de l'enceinte et une paroi arrière 102. A l'intérieur de l'enceinte, deux bouteilles de gaz B et B' sont présentes et chacune est reliée à un bloc multifonctions 3 tel qu'illustré sur la figure 1, via des moyens de connexion 6. L'installation 1 telle que représentée sur la figure 2 a sa porte 101 fermée et contient à l'intérieur de son enceinte, deux blocs multifonctions 3 tels qu'illustrés sur la figure 1.

Le volume diminué grâce aux blocs multifonctions 3 mis en œuvre pour la distribution du gaz dans une installation selon l'invention garantit une manipulation sécurisée et rapide des gaz toxiques, corrosifs, inflammables et pyrophoriques.

La présente invention permet de réduire le nombre de pièges particulaires dans le bloc multifonctions 3. L'invention met en œuvre un dispositif présentant des moyens d'installation, de dépannage et de modification rapides et faciles. Il est en effet simple de transporter et de manipuler ces blocs 3.

L'invention décrite présente une structure simplifiée et adaptée aux applications visées, ce qui permet de minimiser le coût du produit et son encombrement. Le composant principal de l'installation objet de la présente invention, c'est-à-dire le bloc 3 intégrant le détendeur 4 et les 3 vannes V1, V2 et V3 développé spécifiquement pour cette application, est une caractéristique nouvelle permettant un gain notable de place et d'encombrement.

La structure a été spécialement étudiée afin de minimiser le coût, l'encombrement et le nombre de composants tout en gardant les fonctionnalités nécessaires.

Afin de permettre une distribution ininterrompue de gaz, les deux blocs 3, fixés chacun à une bouteille de gaz (B et B') sont intégrés dans l'installation 1 selon l'invention (ils sont par exemple disposés côte à côte sur la paroi arrière de l'enceinte de l'installation) pour permettre de basculer de la première bouteille à la seconde, lorsqu'elle atteint son niveau bas de remplissage (seuil de basculement).

Cet équipement tire donc avantage de l'utilisation de blocs 3 (détendeur en amont de vannes, volume de purge réduit, bas coût) et du dispositif de basculement développé sur les installations dites « gas cabinets » en anglais.

La continuité de distribution de gaz est une exigence des utilisateurs de ce genre d'équipement qui leur permet d'éviter l'interruption de leur production. L'installation, objet de la présente invention, se différencie des systèmes connus jusqu'à présent, par exemple des installations miniatures, par le fait que ces dernières peuvent être montées sur une bouteille, offrant une très faible empreinte au sol, car elles ne prennent guère plus de place que la taille de la bouteille elle-même, ce qui convient aux utilisateurs de faibles quantités de gaz et de manière discontinue, tels que les laboratoires, qui peuvent parfois avoir des contraintes en termes d'espace.

## Revendications

1. Installation (1) de fourniture de gaz munie d'une enceinte d'isolation comprenant une paroi arrière (102) et deux parois latérales (100, 100') ainsi que d'une porte (101) pivotant autour d'un axe vertical (X) pour permettre l'ouverture et la fermeture de l'enceinte, ladite installation (1) comprenant deux blocs multifonctions (3), abritant chacun un circuit de fluide, fixés sur ladite paroi arrière à l'intérieur de ladite enceinte et comprenant chacun :
- un unique détendeur (4),
- un système de purge constitué de trois vannes (V1, V2, V3),
- un moyen de connexion (6) fluidique vers le contenu d'une bouteille (B, B'),
- une sortie permettant l'alimentation en gaz d'un équipement,
**caractérisée en ce que** le détendeur (4) est situé en amont du système de purge et **en ce que** la surface de l'empreinte murale de chaque bloc multifonctions sur ladite paroi arrière est inférieure à 270 cm², de préférence inférieure à 220 cm², et **caractérisée en ce que** les deux blocs (3) fixés chacun à une bouteille (B et B') sont agencés de manière à permettre un basculement automatique d'une bouteille à l'autre afin de permettre une distribution ininterrompue de gaz.

2. Installation selon la revendication précédente **caractérisée en ce que** deux bouteilles de gaz sont contenues dans l'enceinte, chacune des deux bouteilles étant reliée à un des deux blocs multifonctions.

3. Installation selon l'une des revendications précédentes comprenant en outre un générateur de vide (5).

4. Installation selon l'une des revendications précédentes **caractérisée en ce que** le système de purge est un système dit de purge en croix comprenant un premier conduit (7) dit de pressurisation, un deuxième conduit (8) de sortie permettant de faire le vide et un troisième conduit (9) d'extraction permettant d'acheminer le gaz à distribuer vers un équipement (E), les trois conduits (7, 8 et 9) étant reliés en un point A situé en aval du détendeur (4).

5. Installation selon l'une des revendications précédentes **caractérisée en ce que** les blocs multifonctions (3) comprennent en outre un capteur (11) de pression en amont du détendeur (4).

6. Installation selon l'une des revendications précédentes **caractérisée en ce que** les blocs multifonctions (3) comprennent en outre un capteur de pression (11) en aval du détendeur (4).

7. Installation selon la revendication précédente **caractérisée en ce que** le capteur de pression (11) est en amont du système de purge.

8. Installation selon l'une des revendications précédentes **caractérisée en ce qu'**elle comprend un raccord (10) situé sur une de ses parois extérieures pouvant être connecté à un système d'extraction.

9. Installation selon l'une des revendications 4 à 8 **caractérisée en ce qu'**elle comprenant un système de commande (15) permettant l'actionnement des vannes pneumatiques (V1, V2, V3), la gestion des capteurs de pression et des cycles de purge.

10. Installation selon la revendication précédente, **caractérisée en ce que** le système de commande (15) contient un port de communication choisi parmi un émetteur-récepteur sans fil, un port ethernet, un émetteur-récepteur radio cellulaire, un émetteur-récepteur WIFI et un émetteur-récepteur Bluetooth.

## Patentansprüche

1. Anlage (1) zur Gasversorgung, die mit einem Isoliergefäß versehen ist, das eine Rückwand (102) und zwei Seitenwände (100, 100') sowie eine um eine vertikale Achse (X) schwenkbare Tür (101) umfasst, um das Öffnen und Schließen des Gefäßes zu ermöglichen, wobei die Anlage (1) zwei Multifunktionsblöcke (3) umfasst, die jeweils einen Fluidkreislauf beherbergen, an der Rückwand innerhalb des Gefäßes befestigt sind und jeweils Folgendes umfassen:
- einen einzigen Druckminderer (4),
- ein Entlüftungssystem, das aus drei Ventilen (V1, V2, V3) besteht,
- ein Fluidverbindungsmittel (6) zu dem Inhalt einer Flasche (B, B'),
- einen Auslass, der die Zufuhr von Gas von einem Ausrüstungsgegenstand ermöglicht,
**dadurch gekennzeichnet, dass** sich der Druckminderer (4) stromaufwärts des Entlüftungssystems befindet, und dass sich die Oberfläche der Wandvertiefung jedes Multifunktionsblocks an der Rückwand kleiner als 270 cm², bevorzugt kleiner als 220 cm², ist, und **dadurch gekennzeichnet, dass** die zwei Blöcke (3), die jeweils an einer Flasche (B und B') befestigt sind, so angeordnet sind, das sie ein automatisches Schwenken von einer Flasche zur anderen ermöglichen, um eine ununterbrochene Ausgabe von Gas zu ermöglichen.

2. Anlage nach dem vorstehenden Anspruch, **dadurch gekennzeichnet, dass** zwei Gasflaschen in dem Gefäß enthalten sind, wobei jede der zwei Flaschen mit einem der zwei Multifunktionsblöcke verbunden ist.

3. Anlage nach einem der vorstehenden Ansprüche, weiter umfassend einen Vakuumgenerator (5).

4. Anlage nach einem der vorstehenden Ansprüche, **dadurch gekennzeichnet, dass** das Entlüftungssystem ein sogenanntes kreuzförmiges Entlüftungssystem ist, das eine erste sogenannte Druckbeaufschlagungsleitung (7), eine zweite Auslassleitung (8), die es ermöglicht, ein Vakuum zu erzeugen, und eine dritte Extraktionsleitung (9) umfasst, die es ermöglicht, das zu verteilende Gas zu einem Ausrüstungsgegenstand (E) zu leiten, wobei die drei Leitungen (7, 8 und 9) an einem Punkt A verbunden sind, der sich stromabwärts des Druckminderers (4) befindet.

5. Anlage nach einem der vorstehenden Ansprüche, **dadurch gekennzeichnet, dass** die Multifunktionsblöcke (3) weiter einen Drucksensor (11) stromaufwärts des Druckminderers (4) umfassen.

6. Anlage nach einem der vorstehenden Ansprüche, **dadurch gekennzeichnet, dass** die Multifunktionsblöcke (3) weiter einen Drucksensor (11) stromabwärts des Druckminderers (4) umfassen.

7. Anlage nach dem vorstehenden Anspruch, **dadurch gekennzeichnet, dass** der Drucksensor (11) stromaufwärts des Entlüftungssystems ist.

8. Anlage nach einem der vorstehenden Ansprüche, **dadurch gekennzeichnet, dass** sie einen Stutzen (10) umfasst, der sich an einer ihrer Außenwände befindet und mit einem Extraktionsystem verbunden werden kann.

9. Anlage nach einem der Ansprüche 4 bis 8, **dadurch gekennzeichnet, dass** sie ein Steuersystem (15) umfasst, das die Betätigung der pneumatischen Ventile (V1, V2, V3), die Verwaltung der Drucksensoren und der Entlüftungszyklen ermöglicht.

10. Anlage nach dem vorstehenden Anspruch, **dadurch gekennzeichnet, dass** das Steuersystem (15) einen Kommunikationsport enthält, der aus einem drahtlosen Sender-Empfänger, einem Ethernet-Port, einem zellularen Funk-Sender-Empfänger, einem WIFI-Sender-Empfänger und einem Bluetooth-Sender-Empfänger ausgewählt ist.

## Claims

1. Facility (1) for supplying gas provided with an insulating chamber including a rear wall (102) and two side walls (100, 100'), as well as a door (101) that pivots about a vertical axis (X) in order to allow the opening and the closing of the chamber, said facility (1) including two multifunctional blocks (3) that each protect a fluid circuit, attached to said rear wall inside said chamber and each including:
- a single regulator (4),
- a purging system made up of three valves (V1, V2, V3),
- a means (6) for fluid connection to the contents of a cylinder (B, B'),
- an outlet allowing a device to be supplied with gas,
**characterised in that** the regulator (4) is located upstream of the purging system, and **in that** the surface area of the wall recess of each multifunctional block on said rear wall is less than 270cm², preferably less than 220cm², and **characterised in that** the two blocks (3) each fixed to a cylinder (B and B') are arranged so as to allow an automatic tilting from one cylinder to the other, in order to allow an uninterrupted distribution of gas.

2. Facility according to the preceding claim, **characterised in that** two gas cylinders are contained in the chamber, each of the two cylinders being connected to one of the two multifunctional blocks.

3. Facility according to one of the preceding claims further including a vacuum generator (5).

4. Facility according to one of the preceding claims, **characterised in that** the purging system is a so-called cross purge system including a first so-called pressurising conduit (7), a second outlet conduit (8) allowing a vacuum to be formed and a third extraction conduit (9) allowing to convey the gas to be distributed to a device (E), the three conduits (7, 8 and 9) being connected at a point A located downstream from the regulator (4).

5. Facility according to one of the preceding claims, **characterised in that** the multifunctional blocks (3) further include a pressure sensor (11) upstream of the regulator (4).

6. Facility according to one of the preceding claims, **characterised in that** the multifunctional blocks (3) further include a pressure sensor (11) downstream from the regulator (4).

7. Facility according to the preceding claim, **characterised in that** the pressure sensor (11) is upstream from the purging system.

8. Facility according to one of the preceding claims, **characterised in that** it includes a connector (10) located on one of its outer walls that can be connected to an extraction system.

9. Facility according to one of claims 4 to 8, **characterised in that** it includes a command system (15) allowing the actuation of the pneumatic valves (V1, V2, V3), the management of the pressure sensors and the purging cycles.

10. Facility according to the preceding claim, **characterised in that** the command system (15) contains a communication port selected from among a wireless transceiver, an Ethernet port, a cellular radio transceiver, a wi-fi transceiver and a Bluetooth transceiver.
